# EUROPEAN PATENT APPLICATION

(11) **EP 4 797 556 A1**
(43) Date of publication of application: **26.08.2026**
(21) Application number: 24886105.6
(22) Date of filing: 21.10.2024
(51) Int. Cl.: H04B 7/0456, H04L 25/02, H04W 72/1268, H04L 5/00, H04W 88/08

(54) **ELECTRONIC DEVICE AND METHOD FOR TRANSMITTING AND RECEIVING SIGNAL IN MULTIPLE INPUT MULTIPLE OUTPUT SYSTEM**

(30) Priority: 04.11.2023 KR 20230151286; 01.12.2023 KR 20230172400
(71) Applicant: Samsung Electronics Co., Ltd., Suwon-si, Gyeonggi-do 16677 (KR)
(72) Inventor: KIM, Kyeongyeon, Suwon-si Gyeonggi-do 16677 (KR); CHOI, Soongyoon, Suwon-si Gyeonggi-do 16677 (KR); KIM, Minsung, Suwon-si Gyeonggi-do 16677 (KR); KIM, Sangheon, Suwon-si Gyeonggi-do 16677 (KR); YANG, Hayoung, Suwon-si Gyeonggi-do 16677 (KR)
(74) Representative: Gulde & Partner
(86) International application number: PCT/KR2024/016007
(87) International publication number: WO 2025/095430

(57) **Abstract**

Provided is a radio unit (RU) device in embodiments. The device may comprise: a radio frequency (RF) transceiver; a fronthaul transceiver; a memory for storing instructions; and a processor. The instructions, when executed by the processor, cause the device to: acquire reference signals via the RF transceiver; acquire a transformed covariance matrix of the reference signals with respect to noise and interference through random embedding for dimensionality reduction; acquire an extraction matrix through the subspace decomposition of the transformed covariance matrix; use the extraction matrix to pre-combine uplink signals acquired via the RF transceiver; and transmit data of the pre-combined uplink signals to a digital unit (DU) via the fronthaul transceiver. The random embedding may be used to transform a first dimension of the number of reception layers of the RU into a second dimension of a number smaller than the number of reception layers.

## Description

### [Technical Field]

The present disclosure relates to multiple input multiple output (MIMO). For example, the present disclosure relates to an electronic device and a method for transmitting and receiving a signal in a MIMO system.

### [Background Art]

Multiple-input multiple-output (MIMO) technology is used to improve signal transmission/reception performance. Both a transmitter and a receiver using the MIMO technology may use a plurality of antennas. A channel capacity of a wireless communication system using the MIMO technology may be greatly improved compared to single antenna technology.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, a device of a radio unit (RU) is provided. The device may comprise a radio frequency (RF) transceiver, a fronthaul transceiver, memory storing instructions, and a processor. The instructions may cause, when executed by the processor, the device to obtain reference signals through the RF transceiver, obtain a transform covariance matrix for noise and interference of the reference signals through random embedding for dimensionality reduction, obtain an extraction matrix through subspace decomposition of the transform covariance matrix, perform pre-combining using the extraction matrix to uplink signals obtained through the RF transceiver, and transmit, through the fronthaul transceiver to a digital unit (DU), data of the uplink signals on which the pre-combining is performed. The random embedding may be used to transform a first dimension with the number of receiving layers of the RU into a second dimension with a number less than the number of the receiving layers.

In embodiments, a device of a digital unit (DU) is provided. The device may comprise a transceiver, memory storing instructions, and a processor. The instructions may cause, when executed by the processor, the device to obtain reference signals from a radio unit (RU) through the transceiver, obtain a transform covariance matrix for noise and interference of the reference signals through random embedding for dimensionality reduction, obtain an extraction matrix through subspace decomposition of the transform covariance matrix, and obtain transmission signals by performing equalization using the extraction matrix to uplink signals from the RU. The random embedding may be used to transform a first dimension having the number of receiving layers of the RU into a second dimension with a number less than the number of the receiving layers.

In embodiments, a device of a radio unit (RU) is provided. The device may comprise a radio frequency (RF) transceiver, a fronthaul transceiver, memory storing instructions, and a processor. The instructions may cause, when executed by the processor, the device to obtain a covariance matrix for noise and interference through reference signals that are received through the RF transceiver, obtain a noise vector matrix by performing eigen decomposition of the covariance matrix, obtain a filter matrix using the noise vector matrix and a channel matrix for the reference signals, obtain transform signals by applying the filter matrix to uplink signals obtained through the RF transceiver, and transmit, through the fronthaul transceiver to a digital unit (DU), data of the transform signals. The number of columns of the noise vector matrix may be smaller than the number of receiving layers of the RU.

In embodiments, a device of a radio unit (RU) may comprise a radio frequency (RF) transceiver, a fronthaul transceiver, memory storing instructions, and a processor. The instructions may cause, when executed by the processor, the device to obtain reference signals through the RF transceiver, obtain a transform covariance matrix for noise and interference through the reference signals, obtain an extraction matrix having column vectors corresponding to a specified number, by performing QR decomposition of the covariance matrix, among column vectors of an orthogonal matrix of the QR decomposition, obtain a filter matrix using a projection matrix obtained from the extraction matrix and a channel matrix for the reference signals, obtain transform signals by applying the filter matrix to uplink signals obtained through the RF transceiver, and transmit, through the fronthaul transceiver to a digital unit (DU), data of the transform signals.

### [Description of the Drawings]

FIG. 1 illustrates a wireless communication system.
FIG. 2A illustrates a fronthaul interface.
FIG. 2B illustrates a fronthaul interface of an open (O)-radio access network (RAN).
FIG. 3A illustrates components of a distributed unit (DU).
FIG. 3B illustrates components of a radio unit (RU).
FIG. 4 illustrates an example of a function split between a DU and an RU.
FIG. 5 illustrates examples of a transmitter and a receiver.
FIG. 6 illustrates an example of subspace decomposition using random embedding.
FIG. 7 illustrates an example of subspace decomposition using random embedding.
FIG. 8 illustrates an example of precoding or pre-combining using subspace decomposition.
FIG. 9 illustrates an example of a reception operation using eigen decomposition of a covariance matrix for noise and interference.
FIG. 10 illustrates an example of a reception operation using a null-space of a covariance matrix for noise and interference.
FIG. 11 illustrates an example of a reception operation using a null-space of a covariance matrix for noise and interference.
FIG. 12 illustrates an example of a reception operation using weight interpolation.
FIG. 13A and FIG. 13B illustrate examples of performance of a reception operation using random embedding and a null-space.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a signal (e.g., signal, information, message, and signaling), terms referring to a data type (e.g., list, set, and subset), terms for a computation state (e.g., step, operation, and procedure), terms referring to data (e.g., packet, user stream, information, bit, symbol, and codeword), terms referring to a resource (e.g., symbol, slot, subframe, radio frame, subcarrier, resource element (RE), resource block (RB), bandwidth part (BWP), and occasion), terms referring to a channel, terms referring to network entities, terms referring to components of a device, and the like used in the following descriptions are exemplified for convenience of description. Therefore, the present disclosure is not limited to terms described below, and another term having an equivalent technical meaning may be used.

A term referring to a signal (e.g., a signal, information, a message, or signaling), a term referring to a resource (e.g., a symbol, a slot, a subframe, a radio frame, a subcarrier, a resource element (RE), a resource block (RB), a bandwidth part (BWP), or an occasion), a term for a computation state (e.g., a step, an operation, or a procedure), a term referring to data (e.g., a packet, a user stream, information, a bit, a symbol, or a codeword), a term referring to a channel, a term referring to network entities, a term referring to a component of a device, and the like used in the following descriptions are exemplified for convenience of description. Therefore, the present disclosure is not limited to terms described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), European Telecommunications Standards Institute (ETSI), extensible radio access network (xRAN), open-radio access network (O-RAN)), these are only examples for explanation. The various embodiments of the present disclosure may be easily modified and applied to other communication systems.

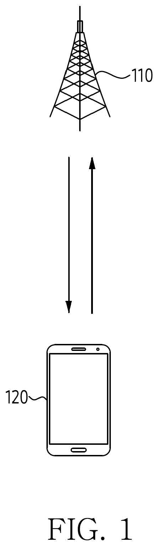

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state informationreference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

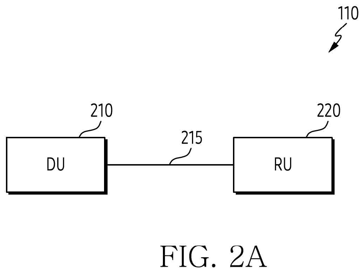

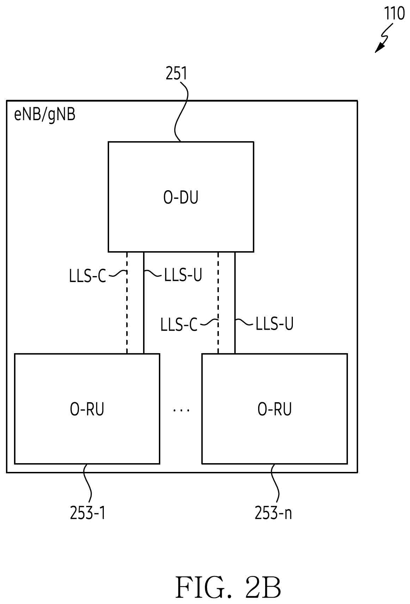

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes small, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface. Unlike a backhaul between a base station and a core network, the fronthaul refers to a link between entities between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

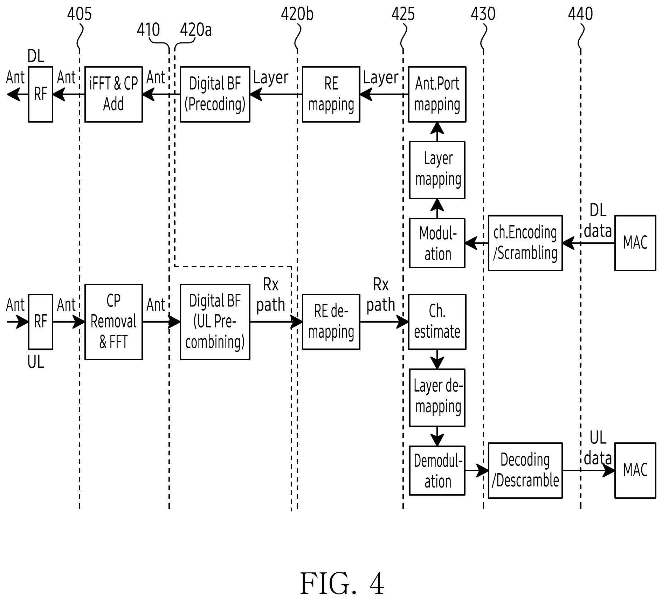

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this case, a distributed unit (DU) may correspond to a digital unit (DU) or include at least a portion of functional components of the digital unit (DU). Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN). As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

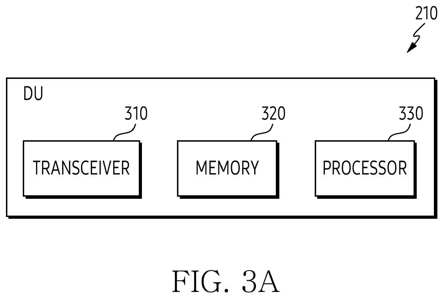

In FIG. 2B, entities of the base station 110 have been described as O-DU and O-RU to describe O-RAN. However, these designations are not to be construed as limiting the embodiments of the present disclosure. In embodiments described below, operations of the DU 210 may also be performed by the O-DU 251. A description of the DU 210 may be applied to the O-DU 251. Likewise, in embodiments described through FIGS. 3A to 12B, operations of the RU 220 may also be performed by the O-RU 253-1. A description of the RU 220 may be applied to the O-RU 253-1.

FIG. 3A illustrates components of a distributed unit (DU). A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330. The memory 320, which is a functional component, indicates a storage space. For example, the memory 320 may be understood to indicate not only memory (e.g., a hard disk, a flash memory, or a RAM) disposed as a part within the DU 210, but also a space for storing instructions and/or programs.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

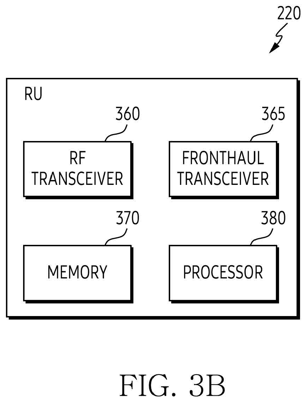

FIG. 3B illustrates components of a radio unit (RU). A configuration exemplified in FIG. 3B, which is as a part of a base station, may be understood as a configuration of the RU 220 of FIG. 2B or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cellspecific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to inform the detection of remote interference. The RF transceiver 460 may transmit a second type of RIM-RS (e.g., RIM-RS type 2 of 3GPP) to inform the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme. The memory 370, which is a functional component, indicates a storage space. For example, the memory 370 may be understood to indicate not only memory (e.g., a hard disk, a flash memory, or a RAM) disposed as a part within the RU 220, but also a space for storing instructions and/or programs.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, the RU performs the RF function, and the DU performs the PHY function. The first function split is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/scrambling (or decoding/discrambling) in both DL and UL, and the DU performs upper PHY functions after modulation (or demodulation). As an example, the seventh function split 440 may be referred to as option 6. Hereinafter, embodiments of the present disclosure are described based on the sixth function split 430, but the described examples do not indicate the exclusion of the application of other function splits. Hereinafter, embodiments of the present disclosure are described based on the sixth function split 430, but the described examples do not indicate excluding application of another function split.

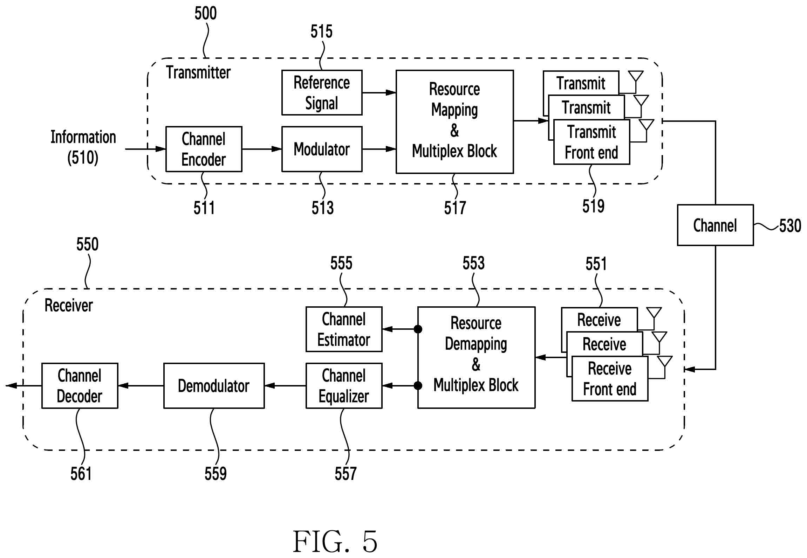

FIG. 5 illustrates an example of a transmitter 500 and a receiver 550. In FIG. 5, a transmission node and a reception node using a channel in a communication system (e.g., a wired communication system or a wireless communication system) or a broadcasting system are described.

Referring to FIG. 5, the transmitter 500 may provide information 510 to the receiver 550. The transmitter 500 may perform transformation between a baseband signal and a bit stream according to a physical layer standard. In order to transmit the information 510 through a channel 530, the transmitter 500 may perform various operations. The transmitter 500 may include a channel encoder 511 and a modulator 513. The channel encoder 511 may encode the information 510 (e.g., polar coding, low density parity check (LDPC)). The encoded information may be referred to as a codeword. The modulator 513 may modulate the codeword (e.g., quadrature phase shift keying (QPSK), 16 quadrature amplitude modulation (QAM), 64 QAM). The codeword may be transformed, through modulation, into complex symbols (which may be referred to as a data symbol in order to be distinguished from a reference signal 515 to be described later). The transmitter 500 may input the complex symbols to a resource mapper and multiplexing block 517. The resource mapping and multiplexing block 517 may map the complex symbols to a resource element (RE) in a resource grid. In a case of multi-antenna transmission, the resource mapping and multiplexing block 517 may map the complex symbols for each antenna in units of REs. The mapping may be determined according to a multiplexing method (e.g., orthogonal frequency division multiplexing (OFDM), discrete frequency transform-spreading (DFT-S) OFDM, code division multiplexing access (CDMA)) determined by a radio access technology (RAT) between the transmitter 500 and the receiver 550. The transmitter 500 may transmit an RF signal on the channel 530 through a transmission front end 519. The transmitter 500 may generate the RF signal through signal processing for the symbols (e.g., digital-to-analog converting (DAC) or up-conversion). The transmitter 500 may transmit the RF signal on the mapped REs.

The transmitter 500 may transmit not only the information 510 but also a reference signal 515 for estimating and demodulating (e.g., coherent demodulation) a channel. For example, the reference signal 515 may be a downlink reference signal. According to a 3GPP NR standard, the reference signal 515 may be an SS/PBCH block, a CSI-RS, a demodulation-reference signal (DM-RS), or a phase tracking (PT)-reference signal (RS). For example, the reference signal 515 may be an uplink reference signal. According to the 3GPP NR standard, the reference signal 515 may be an SRS, a DM-RS, or a PT-RS. The transmitter 500 may provide the reference signal 515 to the resource mapping and multiplexing block 517. The resource mapping and multiplexing block 517 may map symbols corresponding to the reference signal 515 (which may be referred to as a reference symbol to be distinguished from the information 510 described above) to REs in a resource grid according to a type of the reference signal 515 and a matter predefined in a communication protocol. In a case of multi-antenna transmission, the resource mapping and multiplexing block 517 may map the symbols for each antenna in units of REs. The transmitter 500 may transmit an RF signal on the channel 530 through the transmission front end 519. The transmitter 500 may generate the RF signal through signal processing for the symbols (e.g., DAC or up-conversion). The transmitter 500 may transmit the RF signal on the mapped REs.

RF signals delivered on the channel 530 may be affected by damage or gain decrease, and the like due to background noise, interference, fading, and the like. After passing through the channel 530, the RF signals may be received through antenna(s) of the receiver 550. The receiver 550 may receive the RF signals through a reception front end 551. The receiver 550 may obtain complex symbols of the RF signals through signal processing of the reception front end 551 (e.g., down-conversion or analog-to-digital converting (ADC)). A resource demapping and demultiplexing block 553 may transmit information on the complex symbols to a channel estimator 555 and a channel equalizer 557. The channel estimator 555 may perform channel estimation. For example, the channel estimator 555 may perform channel estimation by using received reference symbols. The channel equalizer 557 may perform equalization on the channel 530 through a channel estimation result of the channel estimator 555. The channel equalizer 557 may obtain data symbols by using the equalized channel. The data symbols may be input to a demodulator 559 and a channel decoder 561. The receiver 550 may estimate a bit sequence of the information 510 transmitted from the transmitter 500 through demodulation of the demodulator 559 and decoding of the channel decoder 561. The demodulation may be performed according to a modulation method used in the modulator 513 of the transmitter 500. The decoding may be performed according to a channel coding method used in the channel encoder 511 of the transmitter 500.

Hereinafter, embodiments of the present disclosure relate to a technique for processing a signal in the receiver 550. References described in the present disclosure are as follows.
[1] N. Halko, P. G. Martinsson, J. A. Tropp "FINDING STRUCTURE WITH RANDOMNESS: PROBABILISTIC ALGORITHMS FOR CONSTRUCTING APPROXIMATE MATRIX DECOMPOSITIONS," SIAM Review, Vol 53, Issue 2, pp217-288, May 2011,
[2] Yezi Huang, Wanlu Lei, Chenguang Lu, and Miguel Berg,"Fronthaul Functional Split of IRC-based Beamforming for Massive MIMO Systems," IEEE VTC2019-Fall.

In addition, before describing embodiments of the present disclosure, the following mathematical symbols may indicate the following matters.
• A calligraphic letter (e.g., 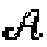 ) is used to indicate a set.
• Throughout the present disclosure, unless otherwise mentioned, it is assumed that an index of a first element of a set, a sequence, and a vector starts from 0 (zero-based numbering).
• Symbols 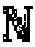 , 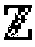 , and 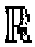 are used to indicate a set of natural numbers, a set of integers, and a set of real numbers, respectively.
• For a non-negative integer *n*, ${ℤ}_{n}$ denotes a set of consecutive *n* integers from 0 to *n*-1. That is, ${ℤ}_{n} = \left\{0,1,…,n-1\right\}$.
• A boldface lowercase letter (e.g., a) is used to indicate a vector, and a boldface uppercase letter (e.g., A) is used to indicate a matrix. In a case of a vector, unless otherwise mentioned, it indicates a column vector. At this time, a vector aₗ denotes a a *l*-th column vector of matrix A.
• For a vector a and a matrix **A**, **a***^{H}* and **A***^{H}* denote a complex transpose (or a conjugate transpose), respectively.

In a massive multiple-input multiple-output (MIMO) system, various types of receivers (e.g., the receiver 550) may be used. For example, a linear receiver such as a minimum mean square error (MMSE) receiver may be used. For example, a successive interference cancellation (SIC) receiver or non-linear receivers expecting maximum likelihood (ML) performance with a repetitive equalization and a decoding method may be used. For example, the receiver 550 may include an MMSE receiver in which interference rejection combining (IRC) for interference of another cell is used.

A resource grid distinguished by a time axis and a frequency axis may include REs configured with a symbol on the time axis and a subcarrier on the frequency axis. In each RE, a reception signal received by at least one reception antenna ***Nᵣₓ*** may be represented as follows. $y \left(k\right) = H \left(k\right) x \left(k\right) + i \left(k\right) + n \left(k\right)$

Herein, the k is a subcarrier index, and when the number of at least one or more transmission layer is *N_{layer}*, the x(*k*) is a ( ${σ}_{x}^{2} = 1$) transmission vector having a size of (*N_{layer}* × 1) and having average power of 1. The n(*k*) denotes a noise vector (e.g., white Gaussian noise), and the i(*k*) denotes an interference vector. A size of the n(*k*) is (*Nᵣₓ* × 1), and a size of the i(*k*), which is an interference vector, is (*Nᵣₓ* × 1). When a channel vector of an l-th layer is h*ₗ*, a channel matrix having a size of *Nᵣₓ* × *N_{layer}* may be represented as H(*k*) = [h₀ h₁ ··· h_{*Nlayer*-1}].

A weight vector of a full-dimensional MMSE-IRC receiver may be represented as follows. $W \left(k\right) = {\left({H}^{˜}\left(k\right){H}^{˜}{\left(k\right)}^{H}+{R}_{nn}\right)}^{- 1} {H}^{˜} \left(k\right) = {\left({H}^{˜}\left(k\right){R}_{nn}^{- 1}{H}^{˜}{\left(k\right)}^{H}+I\right)}^{- 1} {H}^{˜} \left(k\right) {R}_{nn}^{- 1}$

The w(*k*) denotes a weight vector at a subcarrier k. Herein, the **H**(*k*)̃ is an estimated channel matrix, and the I is an identity matrix of (*N_{layer}* × *N_{layer}*). A covariance matrix for noise and interference may be represented as follows. $\left\{i\left(k\right)i{\left(k\right)}^{H}+n\left(k\right)n{\left(k\right)}^{H}\right\} \approx \frac{1}{N} {\sum }_{k}^{N} \left(y\left(k\right)-{H}^{˜}\left(k\right)x\left(k\right)\right) {\left(y\left(k\right)-{H}^{˜}\left(k\right)x\left(k\right)\right)}^{H}$

The {**i**(*k*)**i**(*k*)***^{H}*** + **n**(*k*)**n**(*k*)***^{H}***} denotes a covariance matrix for noise and interference. The covariance matrix for noise and interference may be obtained from a sample average using a channel **H̃** estimated from a reference symbol in which a transmission signal is known. Based on Equation 3, an MMSE-IRC equalized signal may be represented as follows. ${\hat{x}}_{MMSE} \left(k\right) = W {\left(k\right)}^{H} y \left(k\right) = W {\left(k\right)}^{H} \left(H\left(k\right)x\left(k\right)+i\left(k\right)+n\left(k\right)\right)$

The **x̂*_{MMSE}***(*k*) denotes an equalized signal at a k-th subcarrier. At this time, it is assumed that a gain of a *l*-th reception signal is $\approx {β}_{l} \left(k\right) = w {\left(k\right)}_{l}^{H} h {\left(k\right)}_{l} \approx w {\left(k\right)}_{l}^{H} {h}^{˜} {\left(k\right)}_{l}$. If an actual transmission signal is known after signal detection, and power of the transmission signal is assumed to be 1, quality of signal detection may be determined as in Equation 5 by regarding a difference between the equalized signal and the transmission signal of Equation 4 as an error. This corresponds to an empirical posterior signal to interference plus noise ratio (pSINR). $\frac{1}{\frac{1}{N}} {\sum }_{k}^{N} {\left|x\left(k\right)-{\hat{x}}_{MMSE}\left(k\right)\right|}^{2}$

The N denotes the number of all subcarriers.

In a massive multiple-input multiple-output system, as the number of antennas associated with the channel 530 increases, throughput may increase. On the other hand, as the number of the antennas increases, channel estimation complexity of the channel 530 may increase. In particular, in a process of estimating an inverse matrix of a channel matrix of the channel 530, complexity may increase. Various methods for reducing the complexity have been proposed. In the present disclosure, a technique of a receiver for reducing the complexity is described.

### Random embedding

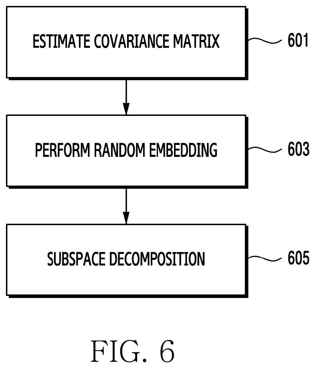

FIG. 6 illustrates an example of subspace decomposition using random embedding. Operations of FIG. 6 may be performed by a receiver 550. For example, the receiver 550 may receive an uplink signal. At least a portion of the operations may be performed by a base station 110, a DU 210, or an RU 220.

Referring to FIG. 6, in operation 601, the receiver 550 may estimate a covariance matrix. The covariance matrix may indicate a channel characteristic experienced by signals received through the receiver 550. The covariance matrix may be determined based on a channel matrix. For example, the covariance matrix may be determined based on the following equation. ${R}_{h} = {\sum }_{u}^{{N}_{u}} {\sum }_{k}^{N} {h}_{u} \left(k\right) {h}_{u} {\left(k\right)}^{H}$

The R*ₕ* denotes a covariance matrix, and the *N*ᵤ denotes the number of users being served in a slot. The hᵤ denotes an estimated channel of a u-th user. Herein, the *N* denotes the number of units accumulated in a time-frequency resource for obtaining covariance, and the *k* denotes an index indicating the corresponding time-frequency resource between 1 and N. For example, channel estimation using an SRS may be performed. A time point at which a channel is estimated and a time point at which the corresponding user is served may be different, and users paired for each slot may also be different. Therefore, the covariance matrix for each user may be reconstructed into a covariance matrix for the users selected for the corresponding slot. A covariance matrix for a channel of each user may be represented as the following equation.$\begin{matrix}{h}_{u} \left(k\right) \to {b}_{i} \\ {R}_{h} \to B \\ {N}_{rx} \to M\end{matrix}$

The B may denote a covariance matrix for a user. The B is a matrix having a size of MxM. The bᵢ denotes a channel matrix of the user.

In operation 603, the receiver 550 may perform random embedding. The random embedding may be used to reduce reception complexity when performing subspace decomposition of the covariance matrix. Assume that an actual rank for a channel 530 between a transmitter 500 and the receiver 550 is K. A rank indicates the number of linearly independent vectors in a matrix of the channel 530. In a massive MIMO system, although the number of assumed antennas (e.g., 64) is large, the number of available ranks in the channel 530 between the transmitter 500 and the receiver 550 is limited. For example, assume that the number of all antennas is 64. If eight layers are used in a communication protocol (e.g., when eight terminals having one transmission antenna are supported in the same resource region, a maximum rank of 8 is used, it may be a maximum of 8 when supporting DMRS-config 1 of terminals before NR Release 18, and up to 24 may be supported from NR Release 18), channel estimation results of other reception antennas (e.g., 56 layers) may be overhead. Therefore, the random embedding may be used to provide the same reception performance as before while reducing computation complexity of channel estimation. A dimension of a column in a random embedding matrix may be S. The S may be greater than or equal to the K. Due to the random embedding matrix, a size of the covariance matrix may be changed. The receiver 550 may apply the random embedding matrix to the covariance matrix. For example, the receiver 550 may obtain a transform covariance matrix based on the following equation. ${B}^{˜} = BΩ$

The B denotes a covariance matrix, and the Ω denotes a random embedding matrix. The **Ω** may be a matrix having a size of *M* × *S*. The B̃ denotes a transform covariance matrix. Through the random embedding matrix, a size of the transform covariance matrix may be reduced. Due to the reduced size, complexity for operations using the subspace decomposition and subspace decomposition described later (e.g., projection, precoding, pre-combining, and rank estimation) may be reduced.

The receiver 550 may determine a random embedding matrix. Power of the random embedding matrix may be 1. By application of the random embedding matrix, a power magnitude of a covariance matrix may not be changed. In addition, column vectors of the random embedding matrix may be linearly independent from each other. The random embedding matrix may be understood as rotating a second dimension among a first dimension and the second dimension of the covariance matrix. Without transforming the first dimension used for channel estimation of antennas among the covariance matrix, complexity may be reduced through the rotation of the second dimension. As a non-limiting example, the column vectors may be orthogonal to each other. For example, the random embedding matrix may be an independent and isotropic distributed (i.i.d.) gaussian random matrix. For example, the random embedding matrix may be an isotropic random matrix (e.g., a Haar matrix). For example, the random embedding matrix may be a tensor matrix. For example, the random embedding matrix may be an isotropic random matrix having a specific structure (e.g., a matrix including FFT and the like having a trigonometric function as an element). For the random embedding matrix, the reference [1] may be referred to.

In operation 605, the receiver 550 may perform subspace decomposition. The subspace decomposition may indicate an operation for decomposing a transform covariance matrix obtained through the random embedding matrix into a plurality of subspaces orthogonal to each other. According to an embodiment, the receiver 550 may perform QR decomposition. The QR decomposition indicates a computation of decomposing a matrix into an orthogonal matrix (hereinafter, a Q matrix) and an upper triangular matrix (hereinafter, an R matrix). The QR decomposition indicates an orthogonalization technique of basis vectors through the Q matrix and the R matrix. Hereinafter, in the present disclosure, the QR decomposition is exemplified as a technique for finding orthogonal basis vectors, but a decomposition technique for finding orthogonal basis vectors other than the QR decomposition may also be understood as an embodiment of the present disclosure. For example, the Q matrix may be an orthonormal matrix. Row vectors of the Q matrix may be perpendicular to each other, and have a length of 1. For example, the QR decomposition may be represented as the following equation. ${B}^{˜} P = QR$

The **B̃** denotes a transform covariance matrix. The ***Q*** denotes a unitary matrix having a size of *M* × *S*. The unitary matrix denotes a matrix of which a conjugate transpose is the same as an inverse matrix. The ***R*** denotes an upper triangular matrix (e.g., in a descending order) having a size of *S* × *S*. The ***P*** denotes a permutation matrix for sorting having a size of *S* × *S*.

The receiver 550 may obtain K columns (e.g., top K columns according to sorting) among columns of the Q matrix of the QR decomposition. A matrix having the K columns (hereinafter, an extraction matrix) may be represented as **Q_{1:*K*}.** According to an embodiment, the receiver 550 may perform projection using the extraction matrix. The projection may be used to reduce complexity of a computation between vectors. For example, the receiver 550 may obtain a projection matrix ${P}_{B} = {Q}_{1 : K} {Q}_{1 : K}^{H}$. According to an embodiment, the receiver 550 may perform precoding using the extraction matrix. For example, a matrix F used for the precoding may be the extraction matrix **Q_{1:K}**. According to an embodiment, the receiver 550 may perform pre-combining using the extraction matrix. For example, a matrix **F_{R}** used for the pre-combining may be a conjugate transpose matrix ${Q}_{1 : K}^{H}$ of the extraction matrix. Even if there is an additional computation of *SMlog*₂*M* ∼ *SM*² according to a type of the random embedding matrix, in a case of QR decomposition, complexity may be reduced from Or(*M*³) to Or(*MS*²). Or(*·*) denotes a maximum order of computation complexity.

In order to select a rank more accurately, eigen decomposition may be used. As eigen decomposition is performed after a dimension is reduced from M to S, complexity may be reduced. According to an embodiment, the receiver 550 may perform eigen decomposition. For example, the eigen decomposition may be performed based on the following equation. ${Q}_{1}^{H} B {Q}_{1} = {U}_{2} Λ {U}_{2}^{H} \to B \approx {Q}_{1} {U}_{2} Λ {U}_{2}^{H} {Q}_{1}^{H}$

The ***Q*₁** denotes a unitary matrix having a size of *M* × *S*, and may correspond to the Q matrix of Equation 9. The ***U*₂** denotes a matrix having a size of *S* × *S*, and denotes eigen vectors. The ***Λ***₂ denotes a matrix having a size of *S* × *S*, and denotes a diagonal matrix having an eigen value as a diagonal component (e.g., sorted in an order of large eigen values). When approximating with a rank S, an eigen vector of a covariance matrix may be derived as follows. ${V}_{2} = {Q}_{1} {U}_{2}$

The ***V***₂ denotes an eigen vector according to the eigen decomposition, having a size of *M* × *S*. The receiver 550 may obtain K columns (e.g., top K column vectors according to sorting) among columns of an eigen vector matrix of the QR decomposition. A matrix having the K columns (hereinafter, an extraction matrix) may be represented as **V_{1:*K*}**.

According to an embodiment, the receiver 550 may perform projection using the extraction matrix. The projection may be used to reduce complexity of a computation between vectors. For example, the receiver 550 may obtain a projection matrix ${P}_{B} = {V}_{1 : K} {V}_{1 : K}^{H}$. According to an embodiment, the receiver 550 may perform precoding using the extraction matrix. For example, a matrix **F** used for the precoding may be the extraction matrix **V_{1:*K*}**. According to an embodiment, the receiver 550 may perform pre-combining using the extraction matrix. For example, a matrix **F_{R}** used for the pre-combining (hereinafter, a pre-combining matrix) may be a conjugate transpose matrix ${V}_{1 : K}^{H}$ of the extraction matrix. According to an embodiment, the receiver 550 may perform rank estimation using the extraction matrix. For example, the receiver 550 may determine a rank based on the following equation. ${B}_{r} = {V}_{1 : K} {Λ}_{1 : K} {V}_{1 : K}^{H}$

The ***Bᵣ*** denotes a matrix used for rank estimation. As a value of an element of the matrix is larger, it may be selected as a valid stream. The **Λ_{1:K}** denotes a diagonal matrix having a size of *K* × *K* and sorted in a descending order of eigen values (eigenvalues). For example, in a rank selection algorithm, complexity may be changed from Or(*M*²*K*) to Or(*MSK*). Or(·) denotes a maximum order of computation complexity.

As another example, unlike a method used in Equation 10, Equation 11, and Equation 12, eigen decomposition may be performed based on the following equation. ${{B}^{˜}}_{app} ≜ {\left({Q}_{1}^{H}Ω\right)}^{- 1} {Q}_{1}^{H} {B}^{˜} \approx {U}_{3} {Λ}_{3} {U}_{3}^{H}$

The ***B̃ₐₚₚ*** denotes a transform covariance matrix having a size of ***S* × *S*.** The ***Q*₁** denotes a unitary matrix having a size of *M* × *S*, and may correspond to the Q matrix of Equation 9. The ***Ω*** denotes a random embedding matrix, and Equation 8 may be referred to. The ***U*₃** denotes a matrix having a size of *S* × *S*, and denotes eigen vectors. The ***Λ*₃** denotes a matrix having a size of *S* × *S*, and denotes a diagonal matrix having an eigen value as a diagonal component (e.g., sorted in an order of large eigen values). When approximating with a rank S, an eigen vector of a covariance matrix may be derived as follows. ${V}_{3} = {Q}_{1} {U}_{3}$

The ***V*₃** denotes an eigen vector matrix according to the eigen decomposition, having a size of *M* × *S*. The receiver 550 may obtain K columns (e.g., top K column vectors according to sorting) among columns of an eigen vector matrix of the QR decomposition. A matrix having the K columns (hereinafter, an extraction matrix) may be represented as **V_{1:*K*}**.

According to an embodiment, the receiver 550 may perform projection using the extraction matrix. The projection may be used to reduce complexity of a computation between vectors. For example, the receiver 550 may obtain a projection matrix ${P}_{B} = {V}_{1 : K} {V}_{1 : K}^{H}$. According to an embodiment, the receiver 550 may perform precoding using the extraction matrix. For example, a matrix **F_{R}** used for the precoding may be the extraction matrix **V_{1:*K*}**. According to an embodiment, the receiver 550 may perform pre-combining using the extraction matrix. For example, a matrix **F_{R}** used for the pre-combining may be a conjugate transpose matrix ${V}_{1 : K}^{H}$ of the extraction matrix. According to an embodiment, the receiver 550 may perform rank estimation using the extraction matrix. For example, the receiver 550 may determine a rank based on the following equation. ${B}_{r} = {V}_{1 : K} {Λ}_{1 : K} {V}_{1 : K}^{H}$

The ***B*ᵣ** denotes a matrix used for rank estimation. As a value of an element of the matrix is larger, it may be selected as a valid stream. The **Λ_{1:2}** denotes a diagonal matrix having a size of ***K* × *K*** and sorted in a descending order of eigen values (eigenvalues). For example, in a rank selection algorithm, complexity may be changed from Or(*M*²*K*) to Or(*MSK*). Or(·) denotes a maximum order of computation complexity.

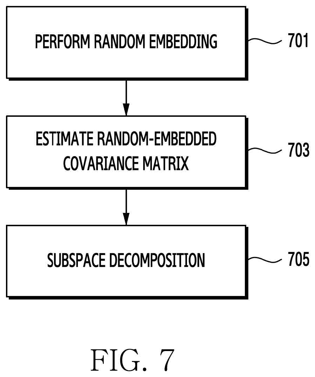

FIG. 7 illustrates an example of subspace decomposition using random embedding. Operations of FIG. 7 may be performed by a receiver 550. For example, the receiver 550 may receive an uplink signal. At least a portion of the operations may be performed by a base station 110, a DU 210, or an RU 220.

Referring to FIG. 7, in operation 701, the receiver 550 may perform random embedding. The random embedding may be used to reduce reception complexity when performing subspace decomposition of the covariance matrix. Assume that an actual rank for a channel 530 between a transmitter 500 and the receiver 550 is K. A rank indicates the number of linearly independent vectors in a matrix of the channel 530. In a massive MIMO system, although the number of assumed antennas (e.g., 64) is large, the number of available ranks in the channel 530 between the transmitter 500 and the receiver 550 is limited. For example, assume that the number of all antennas is 64. Since a maximum rank of 8 is defined in a communication protocol, channel estimation results of other reception antennas (e.g., 56 layers) may be overhead. Therefore, the random embedding may be used to provide the same reception performance as before while reducing computation complexity of channel estimation. In the random embedding matrix, a dimension of a column may be S. The S may be greater than or equal to the K. For example, the receiver 550 may perform random embedding based on the following equation. ${{{b}_{i}}^{˜}}^{H} = {b}_{i}^{H} Ω$

The ${b}_{i}^{H}$ denotes a conjugate transpose of a channel matrix, the **Ω** denotes a random embedding matrix. The ${{{b}_{i}}^{˜}}^{H}$ denotes a conjugate transpose of a transform channel vector. The **Ω** may be a matrix having a size of *M* × *S*. Through the random embedding matrix, a size of a channel vector may be reduced. Due to the reduced size, complexity using the subspace decomposition and subspace decomposition described later (e.g., projection, precoding, pre-combining, and rank estimation) may be reduced.

Power of the random embedding matrix may be 1. By application of the random embedding matrix, a power magnitude of a covariance matrix may not be changed. In addition, column vectors of the random embedding matrix may be linearly independent from each other. The random embedding matrix may be understood as rotating a second dimension among a first dimension and the second dimension of the covariance matrix. Without transforming the first dimension used for channel estimation of antennas among the covariance matrix, complexity may be reduced through the rotation of the second dimension. As a non-limiting example, the column vectors may be orthogonal to each other. For example, the random embedding matrix may be an independent and isotropic distributed (i.i.d.) gaussian random matrix. For example, the random embedding matrix may be an isotropic random matrix (e.g., a Haar matrix). For example, the random embedding matrix may be a tensor matrix. For example, the random embedding matrix may be an isotropic random matrix having a specific structure (e.g., a matrix including FFT and the like having a trigonometric function as an element). For the random embedding matrix, the reference [1] may be referred to.

In operation 703, the receiver 550 may estimate a random-embedded covariance matrix. For example, the receiver 550 may estimate the random-embedded covariance matrix based on the following equation. ${B}^{˜} = \sum {b}_{i} {{{b}_{i}}^{˜}}^{H}$

The **B̃** denotes a random-embedded covariance matrix, and may be referred to as a transform covariance matrix.

In operation 705, the receiver 550 may perform subspace decomposition. The subspace decomposition may indicate an operation for decomposing the random-embedded covariance matrix into a plurality of subspaces orthogonal to each other. According to an embodiment, the receiver 550 may perform QR decomposition. For example, the QR decomposition may be represented as the following equation. ${B}^{˜} P = QR$

The **B̃** denotes a random-embedded covariance matrix. The ***Q*** denotes a unitary matrix having a size of *M* × *S*. The unitary matrix denotes a matrix of which a conjugate transpose is the same as an inverse matrix. The ***R*** denotes an upper triangular matrix (e.g., in a descending order) having a size of *S* × *S*. The ***P*** denotes a permutation matrix for sorting having a size of *S* × *S*.

The receiver 550 may obtain top K columns among columns of a Q matrix of the QR decomposition. A matrix having the K columns (hereinafter, an extraction matrix) may be represented as **Q_{1:K}**. According to an embodiment, the receiver 550 may perform projection using the extraction matrix. The projection may be used to reduce complexity for a computation between vectors. For example, the receiver 550 may obtain a projection matrix ${P}_{B} = {Q}_{1 : K} {Q}_{1 : K}^{H}$. According to an embodiment, the receiver 550 may perform precoding using the extraction matrix. For example, a matrix **F_{R}** used for the precoding may be the extraction matrix **Q_{1:*K*}.** According to an embodiment, the receiver 550 may perform pre-combining using the extraction matrix. For example, a matrix **F_{R}** used for the pre-combining may be a conjugate transpose matrix ${Q}_{1 : K}^{H}$ of the extraction matrix.

In order to more accurately select a rank, eigen decomposition may be used. As eigen decomposition is performed after a dimension is reduced from M to S, complexity may be reduced. According to an embodiment, the receiver 550 may perform eigen decomposition. For example, the eigen decomposition may be performed based on the following equation. ${{B}^{˜}}_{app} ≜ {\left({Q}_{1}^{H}Ω\right)}^{- 1} {Q}_{1}^{H} {B}^{˜} \approx {U}_{3} {Λ}_{3} {U}_{3}^{H}$

The ***B̃ₐₚₚ*** denotes a transform covariance matrix having a size of *S* × *S*. The *Q*₁ denotes a unitary matrix having a size of *M* × *S*, and may correspond to the Q matrix of Equation 9. The ***Ω*** denotes a random embedding matrix, and Equation 8 may be referred to. The ***U*₃** denotes a matrix having a size of *S* × *S*, and denotes eigen vectors. The ***Λ*₃** denotes a matrix having a size of *S* × *S*, and denotes a diagonal matrix having an eigen value as a diagonal component (e.g., (e.g., sorted in an order of large eigen values). When approximating with a rank S, an eigen vector of a covariance matrix may be derived as follows. ${V}_{3} = {Q}_{1} {U}_{3}$

The ***V*₃** denotes an eigen vector matrix according to the eigen decomposition, having a size of *M* × *S*. The receiver 550 may obtain K column vectors among column vectors of an eigen vector matrix of the QR decomposition. A matrix having the K columns (hereinafter, an extraction matrix) may be represented as **V_{1:*K*}**.

According to an embodiment, the receiver 550 may perform projection using the extraction matrix. The projection may be used to reduce complexity for a computation between vectors. For example, the receiver 550 may obtain a projection matrix ${P}_{B} = {V}_{1 : K} {V}_{1 : K}^{H}$. According to an embodiment, the receiver 550 may perform precoding using the extraction matrix. For example, a matrix **F_{R}** used for the precoding may be the extraction matrix **V_{1:*K*}**. According to an embodiment, the receiver 550 may perform pre-combining using the extraction matrix. For example, a matrix **F_{R}** used for the pre-combining may be a conjugate transpose matrix ${V}_{1 : K}^{H}$ of the extraction matrix. According to an embodiment, the receiver 550 may perform rank estimation using the extraction matrix. For example, the receiver 550 may determine a rank based on the following equation. ${B}_{r} = {V}_{1 : K} {Λ}_{1 : K} {V}_{1 : K}^{H}$

The ***B*ᵣ** denotes a matrix used for rank estimation. As a value of an element of the matrix is larger, it may be selected as a valid stream. The **Λ_{1:K}** denotes a diagonal matrix having a size of *K* × *K* and sorted in a descending order of eigen values (eigenvalues). For example, in a rank selection algorithm, complexity may be changed from Or(*M*²*K*) to Or(*MSK*)*.*

In FIG. 6, a reception operation for performing random embedding on a covariance matrix is proposed, whereas in FIG. 7, a reception operation for obtaining a covariance matrix after directly performing random embedding on a channel matrix is proposed. Since subspace decomposition is performed for each covariance matrix, it is obtained as the number of computations of the covariance matrix increases, and thus the reception operation illustrated in FIG. 7 may be advantageous in terms of complexity reduction as the number accumulated for the covariance matrix increases.

In the present disclosure, as subspace decomposition techniques such as QR decomposition and/or eigen decomposition is performed together with random embedding, complexity may be reduced and stability of the subspace decomposition may be improved. In particular, as embedding is performed on an instantaneous vector in addition to embedding of a covariance matrix, computation complexity of the covariance matrix may be reduced. A subspace obtained according to the above-described method may have a dimension reduced based on the number of supported layers and a rank according to the number of strong interferences. The subspace in which the dimension is reduced may be utilized for projection to a space of a signal or a space of noise and interference / downlink MIMO precoding / an uplink MIMO combiner for port reduction / rank approximation of a covariance matrix, and the like, and may reduce computation complexity in each operation. A complexity reduction technique utilizing random embedding may support various dimensions compared to maximal ratio combining (MRC) and maximal ratio transmission (MRT) using an existing instantaneous channel. In addition, the technique may use an advantage of a subspace-based transceiver that may maximize an average signal to noise ratio (SNR) or a signal to interference noise ratio (SINR) in a supportable dimension as it is. For example, in a case that an isotropic matrix having a specific structure is used for random embedding, complexity reduction may be represented as shown in the table below.

**[Table 1]**

| | Covariance matrix | QR decompositi on | Eigen decomposition |
|---|---|---|---|
| Method without performing | ${N}_{u} N {N}_{rx}^{2}$ | ${Or}_{1} \left(K{N}_{rx}^{2}\right)$ | ${Or}_{2} \left(IK{N}_{rx}^{2}\right)$ |
| random embedding | | | |
| Method of FIG. 6 | ${N}_{u} {NN}_{rx}^{2} + {SN}_{rx} {log}_{2} {N}_{rx}$ | Or(*SKNᵣₓ*) | *SNᵣₓ*(*K* + log₂*Nᵣₓ*) + Or₂(*IKS*²) |
| Method of FIG. 7 | *NᵤNS*(*Nᵣₓ* + log₂ *Nᵣₓ*) | | |

As an example, if it has a relationship of *N*ᵤ ≤ *K* ≤ *S < Nᵣₓ* has a and *I* fixes an error rate as the number of repetitions, it may be related to a rank K of a channel (e.g., the channel 530).

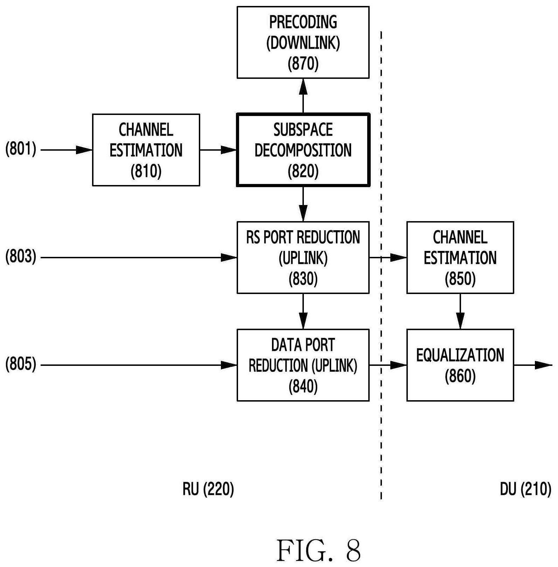

FIG. 8 illustrates an example of precoding or pre-combining using subspace decomposition.

Referring to FIG. 8, an RU 220 may perform channel estimation 810. The RU 220 may receive a reference signal 801. For example, the reference signal 801 may be a sounding reference signal (SRS). For example, the reference signal 801 may be a DMRS (e.g., a front-loaded DMRS). The RU 220 may perform the channel estimation 810 through the reference signal 801. For example, the RU 220 may obtain a channel matrix H. As an example, a size of the channel matrix H may be MxN (e.g., M is the number of receiving layers, and N is the number of transmission layers).

The RU 220 may perform subspace decomposition 820. For the subspace decomposition 820, the random embedding (e.g., the operation 603 and the operation 703) and the subspace decomposition (e.g., the operation 605 and the operation 705) described with reference to FIGS. 6 to 7 may be referred to. The RU 220 may determine a covariance matrix from the channel matrix, which is a result of the channel estimation 810. According to an embodiment, the RU 220 may determine a transform covariance matrix from a random-embedded channel matrix after performing random embedding on the channel matrix. According to another embodiment, the RU 220 may determine a transform covariance matrix by performing random embedding on the covariance matrix. The RU 220 may perform the subspace decomposition 820 on the covariance matrix or the transform covariance matrix. For example, the RU 220 may perform QR decomposition as the subspace decomposition 820. For example, the RU 220 may perform eigen decomposition as the subspace decomposition 820. The RU 220 may obtain an extraction matrix through the subspace decomposition 820. The extraction matrix denotes a matrix configured with top K columns among columns of a Q matrix of the QR decomposition or columns of an eigen vector matrix. The K denotes a rank. For example, the RU 220 may obtain an extraction matrix **Q_{1:*K*}.** For example, the RU 220 may obtain an extraction matrix **V_{1:*K*}**. The RU 220 may obtain a pre-combining matrix **F_{R}** through the subspace decomposition 820. The pre-combining matrix **F_{R}** may be a conjugate transpose of the extraction matrix **Q_{1:*K*}** or a conjugate transpose of the extraction matrix **V_{1:*K*}**. For example, a size of the pre-combining matrix may be KxM.

The RU 220 may perform RS port reduction 830. The RU 220 may receive a reference signal 803. For example, the reference signal 803 may be a sounding reference signal (SRS). For example, the reference signal 803 may be a DMRS (e.g., a front-loaded DMRS). The RU 220 may perform pre-combining for port reduction for the reference signal 803. The RU 220 may multiply a vector of the reference signal 803 by the pre-combining matrix for the pre-combining. $y ′ = {F}_{R} y$

The *y*' denotes a reference signal on which pre-combining is performed, the *y* denotes the reference signal 803. The **F_{R}** denotes a pre-combining matrix. The RU 220 may transmit information on the reference signal on which the pre-combining is performed to a DU 210. The RU 220 may provide information reduced from M to K according to the subspace decomposition 820 in the RU 220.

The DU 210 may perform channel estimation 850. The DU 210 may perform the channel estimation 850 through the reference signal on which the pre-combining is performed. When assuming that the number of ports is L, the DU 210 may estimate a channel matrix having a size of KxL.

The RU 220 may perform data port reduction 840. The RU 220 may receive a data signal 805. For example, the data signal 805 may include a PUSCH. The RU 220 may perform pre-combining for port reduction for the data signal 805. The RU 220 may multiply a vector of the data signal 805 by the pre-combining matrix for the pre-combining. $y ′ = {F}_{R} y$

The ***y*'** denotes a data signal on which pre-combining is performed, the ***y*** denotes the data signal 805. The **F_{R}** denotes a pre-combining matrix. The RU 220 may transmit information on the data signal on which the pre-combining is performed to the DU 210. The RU 220 may provide information reduced from M to K according to the subspace decomposition 820 in the RU 220.

The DU 210 may perform equalization 860. The DU 210 may perform the equalization 860 of the data signal on which the pre-combining is performed through a result of the channel estimation 850. The DU 210 may obtain signals of independent paths of a channel through the equalization 860.

The DU 210 may also maximize power of a channel based on an estimated channel. Although not illustrated in FIG. 8, if interference estimation is possible, a receiver that maximizes a signal to interference plus noise ratio (SINR) may also be configured. For example, if maximal ratio combining (MRC) is performed, the number of ports may be reduced to L. Therefore, extra ports may be used for interference estimation. A port reduction technique using the subspace decomposition 820 may facilitate selecting the number of ports greater than the number of supportable layers (e.g., a rank).

In the above-described operations, an example of pre-combining of an uplink signal (e.g., the reference signal 801, the reference signal 803, or the data signal 805) has been described. Information obtained through the subspace decomposition 820 may be applied not only to pre-combining but also to precoding. According to an embodiment, the DU 210 may perform precoding 870. The DU 210 may perform the precoding 870 for downlink data based on a result of the subspace decomposition 820. For example, the DU 210 may transmit downlink data through the RU 220. The DU 210 may determine a precoder to be applied to the downlink data. The DU 210 may determine an extraction matrix **Q_{1:*K*}** or an extraction matrix **V_{1:*K*}** as the precoder.

### Eigen decomposition

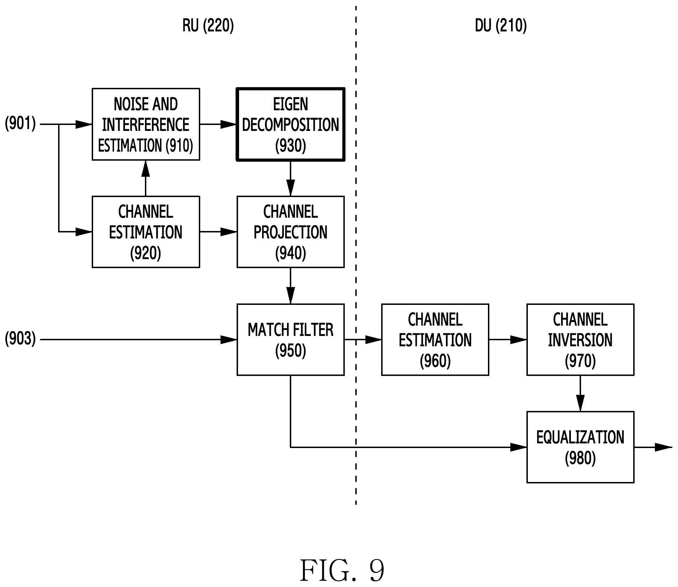

FIG. 9 illustrates an example of a reception operation using eigen decomposition of a covariance matrix for noise and interference.

Referring to FIG. 9, an RU 220 may perform noise and interference estimation 910. The RU 220 may receive a reference signal 901. For example, the reference signal 901 may be an SRS. For example, the reference signal 901 may be a DMRS. The RU 220 may perform the noise and interference estimation 910 through the reference signal 901. For example, the RU 220 may obtain a covariance matrix Rₙₙ for noise and interference. A size of the covariance matrix Rₙₙ for noise and interference may be MxM (e.g., M is the number of transmission layers and the number of receiving layers). Sample vectors of the covariance matrix Rₙₙ for noise and interference may be used for channel and interference estimation. In embodiments of the present disclosure, instead of using the sample vectors of the covariance matrix Rₙₙ for noise and interference as they are, eigen decomposition may be performed. Through the eigen decomposition, the number of samples delivered from the RU 220 to the DU 210 may be reduced. According to an embodiment, the sample vectors of the covariance matrix Rₙₙ for noise and interference may be replaced with noise vectors using eigen vectors and eigen values. As the number of samples delivered to the DU 210 is reduced, the number of ports considered for channel estimation and equalization in the DU 210 may be reduced in a massive MIMO system.

The RU 220 may perform eigen decomposition 930. For example, the RU 220 may perform the eigen decomposition 930 (e.g., the operation 605) on a random-embedding result of a covariance matrix (e.g., the covariance matrix Rₙₙ for noise and interference). For example, the RU 220 may perform the eigen decomposition 930 (e.g., the operation 705) on a random-embedded covariance matrix. For example, the eigen decomposition 930 for the covariance matrix Rₙₙ for noise and interference may be performed according to Equation 10 to Equation 15. $\hat{Z} ≅ {V}_{1 : K} \sqrt{{Λ}_{1 : K}}$

The ***V*_{1:*K*}** denotes a vector configured with top K columns among eigen vectors according to eigen decomposition of a covariance matrix (e.g., a covariance matrix for noise and interference or a random-embedded covariance matrix). The **Λ_{1:K}** denotes eigen values of the K columns.

The ***Ẑ*** may be a noise and interference vector. The ***Ẑ*** may be a matrix having a size of MxK. As the size of the ***Ẑ*** is reduced, a size of information on samples transmitted from the RU 220 to the DU 210 may be reduced. Due to the reduced size, stable communication performance may be provided.

The RU 220 may perform channel estimation 920. The RU 220 may receive the reference signal 901. The RU 220 may perform the channel estimation 920 through the reference signal 901. For example, the RU 220 may obtain a channel matrix H through the channel estimation 920. As an example, a size of the channel matrix H may be MxL (e.g., M is the number of receiving layers, and L is the number of transmission layers).

The RU 220 may perform channel projection 940. The RU 220 may perform the channel projection 940 based on a result of the channel estimation 920 and a result of the eigen decomposition 930. For example, the RU 220 may perform channel projection 940 based on the following equation. $A = \left[\hat{H}\hat{Z}\right]$

The **A** denotes a projection channel matrix according to the channel projection 940, and may have a size of Mx(L+K). The **Ĥ** denotes an estimated channel vector, as the result of the channel estimation 920. The **Ĥ** may have a size of MxL. The **Ẑ** denotes an estimated noise vector, as the result of the eigen decomposition 930. The **Ẑ** may have a size of MxK.

The RU 220 may transform a data signal 903 through a match filter 950. A transformed result may be referred to as transform signals. The transformed result may be provided to the DU 210. For example, the RU 220 may transform the data signal 903 based on the following equation.$y ′ = {A}^{H} y$

The ***y*'** denotes a vector of a transformed data signal, that is, transform signals. The **A^{H}** denotes a filter matrix according to the channel projection 940. The *y* denotes a reception vector of the received data signal 903. The RU 220 may transmit information on the transformed data signal to the DU 210.

The DU 210 may perform channel estimation 960. For example, the DU 210 may perform the channel estimation 960 based on the following equation. ${A}^{˜} = \left[{H}^{˜}{Z}^{˜}\right]$

The **Ã** denotes a projection channel matrix estimated in the DU 210, and may have a size of Mx(L+K). The **H̃** denotes a null vector estimated in the DU 210. The **H̃** may have a size of MxL. The **Z̃** denotes a noise vector estimated in the DU 210. The **Z̃** may have a size of MxK.

The DU 210 may perform channel inversion 970. For example, the DU 210 may perform a computation according to the following equation. $C = {\left({{A}^{˜}}^{H}{A}^{˜}\right)}^{- 1}$

The ***C*** denotes an inversion matrix. The **Ã** denotes a projection channel matrix estimated in the DU 210, and may have a size of Mx(L+K).

The DU 210 may perform equalization 980. For example, the DU 210 may obtain, from the RU 220, a transformed result (e.g., **y' = A^{H}y**) through the match filter 950. The DU 210 may perform the equalization 980 based on the following equation. $\hat{x} = C y ′ = {\left({{A}^{˜}}^{H}{A}^{˜}\right)}^{- 1} {{A}^{˜}}^{H} y$

The **x̂** denotes a vector of a transmission signal obtained through the equalization 980. The **Ã** denotes a projection channel matrix estimated in the DU 210, and may have a size of Mx(L+K).

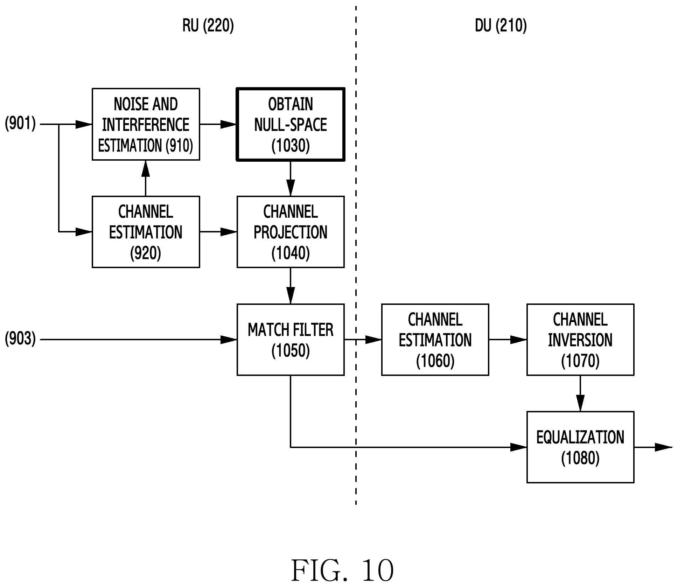

In FIG. 9, an example of compressing samples of a covariance matrix for noise and interference according to eigen decomposition has been described. Signals received through eigen decomposition may be separated into a space of a signal and a space of noise and interference. As column vectors obtained through eigen decomposition are separately projected onto a channel, computation complexity in the DU 210 may be reduced. For example, compared to a method of extracting samples among column vectors of a covariance matrix of noise and interference in Reference [2], the number of ports of data provided from the RU 220 to the DU 210 may be reduced. In performing the eigen decomposition, computation complexity may be additionally reduced through an eigen decomposition method using the random embedding described in FIGS. 6 to 7 (e.g., the method described in Equation 10 to Equation 15). Meanwhile, if signal processing due to noise and interference is more performed in the RU 220, a more simplified computation may be performed in the DU 210. For the simplified computation, a null-space of noise and interference may be used. A channel is projected onto the null-space of noise and interference, and the projected channel may be used for reducing the number of reception ports in the DU or for equalization. Hereinafter, through FIGS. 10 to 12, channel projection using the null-space will be described.

### Channel projection using null-space

FIG. 10 illustrates an example of a reception operation using a null-space of a covariance matrix for noise and interference.

Referring to FIG. 10, an RU 220 may perform noise and interference estimation 910. The RU 220 may receive a reference signal 901. For example, the reference signal 901 may be an SRS. For example, the reference signal 901 may be a DMRS. The RU 220 may perform the noise and interference estimation 910 through the reference signal 901. For example, the RU 220 may obtain a covariance matrix Rₙₙ for noise and interference. A size of the covariance matrix Rₙₙ for noise and interference may be MxM (e.g., M is the number of transmission layers and the number of receiving layers).

The RU 220 may perform channel estimation 920. The RU 220 may receive the reference signal 901. The RU 220 may perform the channel estimation 920 through the reference signal 901. For example, the RU 220 may obtain a channel matrix H through the channel estimation 920. As an example, a size of the channel matrix H may be MxL (e.g., M is the number of receiving layers, and L is the number of transmission layers).

The RU 220 may obtain a null-space 1030. The null-space may indicate a null-space of noise and interference. The null-space of noise and interference may be obtained through subspace decomposition of a covariance matrix for noise and interference (or a transform covariance matrix). For example, a noise and interference vector may be defined based on the following equation. $z ≜ y \left(k\right) - {H}^{˜} \left(k\right) x \left(k\right)$

The **^{z}** denotes a noise and interference vector. The y(*k*) denotes a vector of a reception signal. The **H̃**(*k*) denotes a channel estimated according to channel estimation (e.g., the channel estimation 920). The **x**(*k*) denotes a vector of a transmission signal.

The random-embedded noise and interference vector described in FIGS. 6 to 7 may be represented as follows. ${{z}^{˜}}^{H} = {z}^{H} ∗ Ω$

The **z** denotes a noise and interference vector. The **Ω** denotes a random embedding matrix. The **Ω** may be a matrix having a size of ***M* × *S*.** The **z̃*^{H}*** may be a matrix having a size of 1 **×** *S*.

A covariance matrix for the random-embedded noise and interference may be represented as follows. ${{R}^{˜}}_{nn} = \sum \left\{{z}_{k}{{z}_{k}}^{H}\right\} Ω = \sum \left\{{z}_{k}{{{z}^{˜}}_{k}}^{H}\right\}$

The **R̃ᵤₙ** denotes a random-embedded covariance matrix. The **Z** denotes a noise and interference vector. The **Ω** denotes a random embedding matrix. Hereinafter, although the random-embedded covariance matrix is described as an example, using a null-space without random embedding may also be understood as an embodiment of the present disclosure.

In order to obtain a null-space of the random-embedded covariance matrix, QR decomposition may be performed. For example, the null-space may be obtained based on the following equation. ${{R}^{˜}}_{nn} P = QR$

The ***Q*** denotes a unitary matrix having a size of ***M × S.*** The ***R*** denotes an upper triangular matrix (e.g., in a descending order) having a size of ***S* × *S*.** The ***P*** denotes a permutation matrix for sorting having a size of *S* **×** *S*. ${P}_{{R}_{nn}^{⊥}} ≅ I - {Q}_{1 : K} {{Q}_{1 : K}}^{H}$

The ${P}_{{R}_{nn}^{⊥}}$ denotes a projection matrix for a null-space. The **Q_{1:*K*}** denotes a vector configured with K columns among column vectors of a Q matrix of the QR decomposition. The K may be a pre-specified number. For example, the K may be adjusted according to the number of dominant interferences, complexity, and the like. When sorted QR decomposition in a descending order is performed, a null-space orthogonal to a space configured with K dominant interferences may be configured. Application of the projection matrix may serve to attenuate interference with a resolution of an entire antenna.

The RU 220 may perform channel projection 1040. A projection channel $A ′ = {P}_{{R}_{nn}^{⊥}} H$ in which a channel is projected onto the null-space of noise and interference may be obtained. The number of ports of a reception signal may be reduced by as much as the number of receiving layers.

The RU 220 may transform a data signal 903 through a match filter 1050. A transformed result may be referred to as transform signals. The transformed result may be provided to the DU 210. For example, the RU 220 may transform the data signal 903 based on the following equation. $y ′ = A {′}^{H} y$

The ***y*'** denotes a vector of a transformed data signal, that is, transform signals. The **A'^{H}** denotes a filter matrix according to the channel projection 1040. The *y* denotes a reception vector of the received data signal 903. The RU 220 may transmit information on the transformed data signal to the DU 210.

The DU 210 may perform channel estimation 1060. The DU 210 may perform the channel estimation 1060. For example, the DU 210 may perform the channel estimation 1060 based on the following equation. $A " = {P}_{{R}_{nn}^{⊥}} {H}^{˜}$

The ***A"*** denotes a projection channel matrix estimated in the DU 210, and may have a size of MxL. The ${P}_{{R}_{nn}^{⊥}}$ denotes a projection matrix for a null-space. The ${P}_{{R}_{nn}^{⊥}}$ may have a size of MxM. The **H̃** denotes a null vector estimated in the DU 210. The **H̃** may have a size of MxL.

The DU 210 may perform channel inversion 1070. For example, the DU 210 may perform a computation according to the following equation. $D = {\left(A{"}^{H}A"\right)}^{- 1}$

The ***D*** denotes an inversion matrix. The ***A"*** denotes a projection channel matrix estimated in the DU 210, and may have a size of MxL.

The DU 210 may perform equalization 1080. For example, the DU 210 may obtain, from the RU 220, a transformed result (e.g., **y' = A'^{Hy}**) through the match filter 1050. The DU 210 may perform equalization 1080 based on the following equation. $\hat{x} = D y ′ = {\left(A{"}^{H}A"\right)}^{- 1} A {′}^{H} y$

The **x̂** denotes a vector of a transmission signal obtained through the equalization 1080. The ***A"*** denotes a projection channel matrix estimated in the DU 210, and may have a size of MxL.

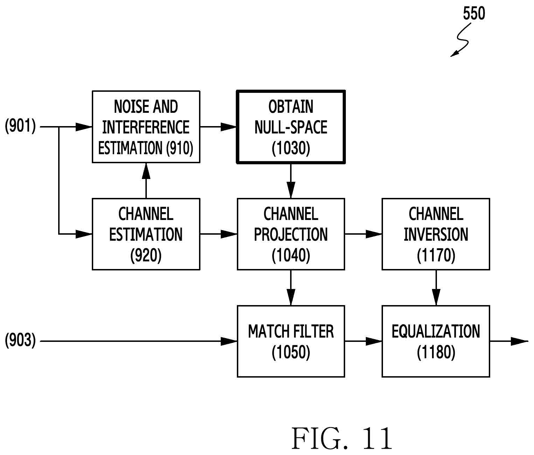

FIG. 11 illustrates an example of a reception operation using a null-space of a covariance matrix for noise and interference. In FIG. 11, an example in which in which processing of all reception signals is performed in a receiver 550 without separation of a DU 210 and an RU 220 is described. The same reference numerals may indicate the same descriptions.

Referring to FIG. 11, the receiver 550 may perform noise and interference estimation 910. The receiver 550 may perform channel estimation 920. The receiver 550 may obtain a null-space 1030. The receiver 550 may perform channel projection 1040. The receiver 550 may transform a data signal 903 through a match filter 1050. Unlike FIG. 10, the receiver 550 is not required to perform an operation of delivering to another node or channel estimation at the another node.

The receiver 550 may perform channel inversion 1170. For example, the receiver 550 may perform a computation according to the following equation. $E = {\left(A{′}^{H}A′\right)}^{- 1}$

The ***E*** denotes an inversion matrix. The ***A'***, which is a result according to the channel projection 1040, denotes a channel projected onto a null-space, that is, a projection channel matrix. The ***A'*** may have a size of MxL.

The receiver 550 may perform equalization 1180. For example, the receiver 550 may obtain a transformed result (e.g., **y' = A'^{Hy}**) through the match filter 1050. The DU 210 may perform the equalization 1080 based on the following equation. $\hat{x} = Ey ′ = {\left(A{′}^{H}A′\right)}^{- 1} A {′}^{H} y$

The **x̂** denotes a vector of a transmission signal obtained through the equalization 980. The ***A'*** denotes a projection channel matrix, and may have a size of MxL. In terms of the data signal 903, an operation of the receiver 550 may be understood as applying a specific filter. For example, the specific filter may be represented as the following equation. $\begin{matrix}\hat{x} = Ey ' = {\left(A{'}^{H}A'\right)}^{- 1} A {'}^{H} y = Wy \\ W = {\left(A{'}^{H}A'\right)}^{- 1} A {'}^{H}\end{matrix}$

The ***W*** denotes the specific filter.

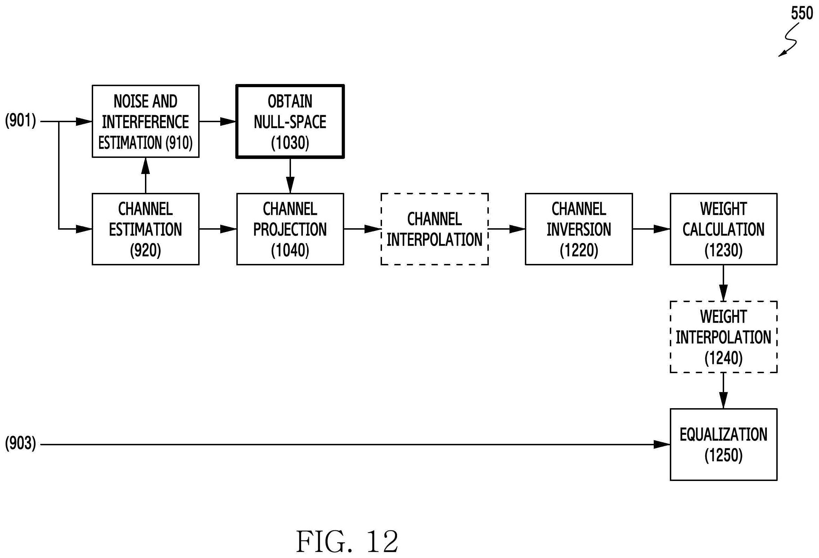

FIG. 12 illustrates an example of a reception operation using weight interpolation. In FIGS. 10 and 11, examples in which a match filter (e.g., the match filter 950 or the match filter 1050) is applied to a received data signal 903 have been described. However, projecting a null-space onto an estimated channel for each of all received symbols may increase a computation load. In FIG. 12, operations of applying a weight (or a filter) to be applied to a reception signal through weight interpolation without a null-space computation for the reception signal are described. At least a portion of operations of a receiver 550 may be performed by a DU 210 or a RU 220. The same reference numerals may indicate the same descriptions.

Referring to FIG. 12, the receiver 550 may perform noise and interference estimation 910. The RU 220 may receive a reference signal 901. For example, the reference signal 901 may be an SRS. For example, the reference signal 901 may be a DMRS. The RU 220 may perform the noise and interference estimation 910 through the reference signal 901. The receiver 550 may perform channel estimation 920. The RU 220 may receive the reference signal 901. The RU 220 may perform the channel estimation 920 through the reference signal 901. For example, the RU 220 may obtain a channel matrix H through the channel estimation 920. As an example, the channel matrix H may have a size of MxL (e.g., M is the number of receiving layers, and L is the number of transmission layers). The receiver 550 may obtain a null-space 1030. The null-space may be obtained through subspace decomposition of a covariance matrix for noise and interference (or a transform covariance matrix). For example, a noise and interference vector may be defined based on the following equation. The receiver 550 may perform channel projection 1040. A projection channel $A ′ = {P}_{{R}_{nn}^{⊥}} H$ in which a null-space of noise and interference projected onto a channel may be obtained. The number of ports of a reception signal may be reduced as much as the number of receiving layers. As a non-limiting example, in a case that the channel projection 1040 is performed only for DMRS symbols, channel interpretation (e.g., channel interpolation) for other symbols may be performed. The receiver 550 may obtain information on a channel or a projection channel at each time-frequency resource through channel interpretation (e.g., channel interpolation).

The receiver 550 may perform channel inversion 1220. For example, the receiver 550 may obtain an inversion matrix ***E* = (*A*'^{H}A*'*)⁻¹.**

The receiver 550 may perform weight calculation 1230. The receiver 550 may calculate a weight based on the inversion matrix and a projection channel matrix. For example, the receiver 550 may calculate the weight based on the following equation. $W = {\left({\hat{H}}^{H}{P}_{{R}_{nn}^{⊥}}\hat{H}\right)}^{- 1} {\hat{H}}^{H} {P}_{{R}_{nn}^{1}} = {\left(A{′}^{H}A′\right)}^{- 1} A {′}^{H}$

The **W** denotes the weight. The ${P}_{{R}_{nn}^{⊥}}$ denotes a projection matrix for a null-space. The **A'** denotes a projection channel matrix and may have a size of MxL.

The receiver 550 may perform weight interpolation 1240. Through the weight interpolation 1240, the receiver 550 may obtain information on a channel experienced by actual reception data by performing interpolation in a frequency domain or interpolation in a time domain based on information on a channel experienced by the reference signal 901. For example, a linear interpolation method or a high-dimensional interpolation method may be used based on a time-frequency resource grid. For example, the receiver 550 may obtain a weight matrix **W'** through the weight interpolation 1240 for the weight of Equation 42.

The receiver 550 may perform equalization 1250. $\hat{x} = W ′ y$

The **x̂** denotes a vector of a transmission signal obtained through the equalization 1250. The **W'** denotes a weight matrix obtained according to the weight interpolation 1240. The ***y*** denotes the data signal 903.

In FIG. 12, an example in which a channel or a weight interpolation method is used when only a filter projecting a channel onto the null-space of noise and interference is known in only some symbols or only some subcarriers, or only a reception weight filter for some symbol subcarriers is known has been described. For example, a channel may change relatively slowly. A reception signal may change for each symbol (a time-domain unit) and for each subcarrier (a frequency-domain unit). Therefore, if filtering for all reception signals is performed, a plurality of filtering is performed even when an amount of change in the channel is small, and thus complexity may increase. Therefore, computation complexity may be improved through the weight interpolation 1240. In addition, the receiver 550 may interpolate only a channel filter projected onto the null-space of noise and interference, without separately interpolating a channel for obtaining the weight. A characteristic of a projection channel matrix may satisfy the following equation. $\begin{matrix}{P}_{{R}_{nn}^{⊥}} {P}_{{R}_{nn}^{⊥}} = {P}_{{R}_{nn}^{⊥}} \\ {P}_{{R}_{nn}^{⊥}}^{H} = {P}_{{R}_{nn}^{⊥}}\end{matrix}$

The ${P}_{{R}_{nn}^{⊥}}$ denotes a projection matrix for the null-space.

Since samples of noise and interference are used in Reference [2], performance degradation is required in order to reduce the number of reception ports of the DU 210. The number of reception ports may represent the number of streams valid for processing a reception signal, and may be associated with complexity of an equalizer of the DU 210 or the receiver 550. In embodiments of the present disclosure, through eigen decomposition, the number of reception ports of the DU 210 may be reduced to the number of transmission layers and the number of interference layers. In addition, in embodiments of the present disclosure, through projection of a null-space, the number of reception ports of the DU 210 may be reduced to the number of transmission layers. As a channel of a signal is projected onto a null-space and a filter according to this is used, computation complexity of the receiver 550 or the DU 210 may be reduced. Specifically, rather than merely increasing the power of a reception signal, reception performance (e.g., SINR) may be improved in an entire dimension of a reception antenna. Complexity reduction is possible while obtaining performance of minimum mean squared error interference rejection combining (MMSE-IRC) in an entire dimension. In addition, complexity may also be reduced in a weight calculation by a characteristic (e.g., **P = P²**) of a projection matrix. Since channel projection using a null-space is not required for each of all reception signals, complexity may be additionally reduced in a weight calculation of a reception signal.

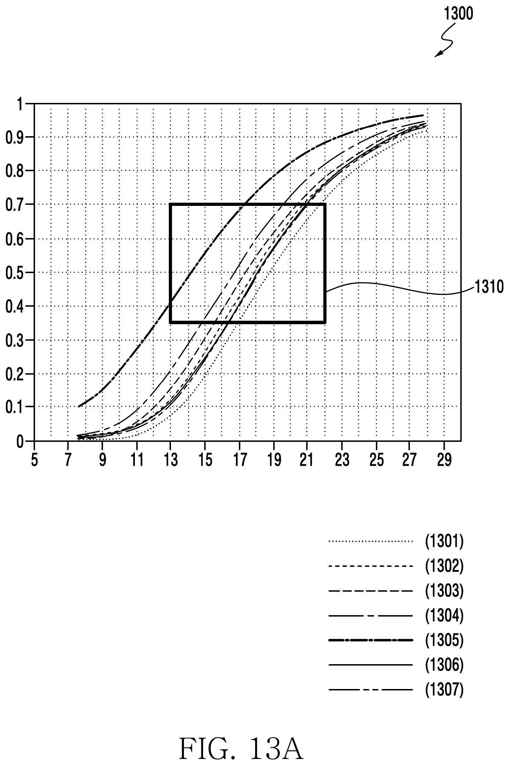

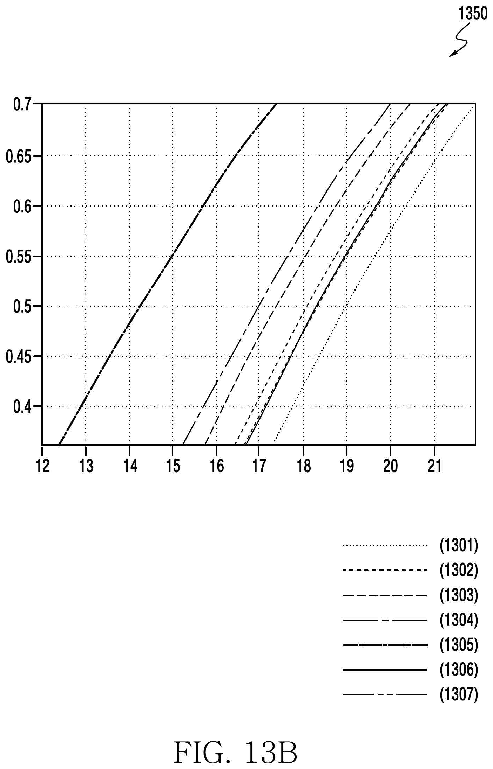

FIG. 13A and FIG. 13B illustrate examples of performance of a reception operation using random embedding and a null-space.

Referring to FIGS. 13A and 13B, a graph 1300 indicates a cumulative distribution function (CDF) according to a pSINR. A horizontal axis of the graph 1300 indicates a pSINR (unit: decibel (dB)), and a vertical axis of the graph 1300 indicates a CDF. A graph 1350 indicates a CDF according to a pSINR. A horizontal axis of the graph 1350 indicates a pSINR (unit: dB), and a vertical axis of the graph 1350 indicates a CDF. The graph 1350 may correspond to a region 1310 of the graph 1300. A first line 1301 indicates reception performance of an MMSE-IRC receiver for an entire dimension, based on an ideal noise and interference matrix. A second line 1302 indicates reception performance of an MMSE-IRC receiver for an entire dimension, based on an estimated noise and interference matrix. A third line 1303 indicates reception performance according to a method of Reference [2] (e.g., in Reference [2], a receiver (an RU and/or a DU) obtains noise and interference samples by extracting samples among column vectors of a covariance matrix of noise and interference, changes a channel through the noise and interference samples, and performs an MMSE reception operation according to the changed channel), when the number of noise and interference samples is 8. A fourth line 1304 indicates reception performance according to the method of Reference [2], when the number of noise and interference samples is 5. A fifth line 1305 indicates reception performance according to the method of Reference [2], when the number of noise and interference samples is 2. A sixth line 1306 indicates reception performance according to the method illustrated in FIG. 9, when the number of noise vectors is 2. A seventh line 1307 indicates reception performance according to the method illustrated in FIG. 10, when the number of noise vectors is 2.

A technique of Reference [2] (e.g., a method of extracting samples among column vectors of a covariance matrix of noise and interference) requires the sufficiently large number of samples compared to the number of interference streams. For example, for two interference streams, a technique using 8 samples (e.g., the third line 1303) shows performance degradation of about 1 dB compared to the proposed technique (e.g., the sixth line 1306 and/or the seventh line 1307). According to the proposed technique, only two paths may be selected for two strong interference streams. Therefore, since only a form of a null-space or two large eigen vectors is considered, computation complexity in a DU 210 may be reduced. As estimation accuracy of noise and interference covariance through eigen decomposition of a covariance matrix for noise and interference is improved, improved performance is shown, compared to an existing MMSE IRC (e.g., the second line 1302). In addition, since paths of interference streams are not selected in a reception technique using random embedding and a null-space (e.g., the seventh line 1307), complexity may be additionally reduced. It may be confirmed that the reception technique shows performance at an equivalent level to an eigenvalue decomposition-based MMSE technique (e.g., the sixth line 1301).

Random embedding may be performed on a covariance matrix itself or random embedding may be performed on a channel or a noise vector for obtaining the covariance matrix. Through a spatial decomposition technique, a filter for separating a space of interference and noise and a space of a signal may be used, or a filter projecting an estimated channel to a null-space orthogonal to the space of interference and noise may be used. Through the filter, as the number of ports of the DU 210 is reduced as much as the number of transmission layers while reducing an influence of interference, complexity of an equalizer may be reduced.

The effects that may be obtained from the present disclosure are not limited to those described above, and any other effects not mentioned herein will be clearly understood by those having ordinary knowledge in the art to which the present disclosure belongs, from the following description.

In embodiments, a device of a radio unit (RU) is provided. The device may comprise a radio frequency (RF) transceiver, a fronthaul transceiver, memory storing instructions, and a processor. The instructions may cause, when executed by the processor, the device to obtain reference signals through the RF transceiver, obtain a transform covariance matrix for noise and interference of the reference signals through random embedding for dimensionality reduction, obtain an extraction matrix through subspace decomposition of the transform covariance matrix, perform pre-combining using the extraction matrix to uplink signals obtained through the RF transceiver, and transmit, through the fronthaul transceiver to a digital unit (DU), data of the uplink signals on which the pre-combining is performed. The random embedding may be used to transform a first dimension with the number of receiving layers of the RU into a second dimension with a number less than the number of the receiving layers.

According to an embodiment, the instructions may cause, when executed by the processor, the device to obtain a noise and interference covariance matrix for a channel of the reference signals, and obtain the transform covariance matrix by multiplying a random embedding matrix for the random embedding to the noise and interference covariance matrix. Each column vector of the random embedding matrix may be linearly independent.

According to an embodiment, the instructions may cause, when executed by the processor to obtain the transform covariance matrix, the device to obtain a channel matrix for the reference signals, obtain a random-embedded channel matrix by multiplying a random embedding matrix for the random embedding to the channel matrix, and obtain a noise and interference covariance matrix for the random-embedded channel matrix, as the transform covariance matrix. Each column vector of the random embedding matrix may be linearly independent.

According to an embodiment, the instructions may cause, when executed by the processor to obtain the extraction matrix, the device to perform QR decomposition for the transform covariance matrix, and extract at least one column vector as much as a specified number K among column vectors of an orthogonal matrix according to the QR decomposition. The extraction matrix may correspond to the extracted at least one column vector.

According to an embodiment, the instructions may cause, when executed by the processor to obtain the extraction matrix, the device to perform eigen decomposition for the transform covariance matrix, and extract at least one column vector as much as a specified number K among column vectors of eigen vector matrices according to the eigen decomposition. The extraction matrix may correspond to the extracted at least one column vector.

According to an embodiment, the random embedding may include a multiplication of a random embedding matrix. The random embedding matrix may be an independent and isotropic distributed (i.i.d.) gaussian random matrix, an isotropic random matrix, or a tensor matrix.

According to an embodiment, the uplink signals may include at least one of physical uplink shared channel (PUSCH) signals, sounding reference signals (SRSs), or uplink demodulation reference signals (DMRSs).

According to an embodiment, the instructions may cause, when executed by the processor, the device to determine a precoding matrix for a downlink signal based on the extraction matrix, generate a transmission signal by applying the precoding matrix to the downlink signal, and transmit the transmission signal through the RF transceiver.

According to an embodiment, the instructions may cause, when executed by the processor, the device to obtain a projection matrix for a null-space, based on the extraction matrix, obtain a filter matrix by applying the projection matrix to a channel matrix for the reference signals, and perform the pre-combining by multiplying the filter matrix to the uplink signals.

In embodiments, a device of a digital unit (DU) is provided. The device may comprise a transceiver, memory storing instructions, and a processor. The instructions may cause, when executed by the processor, the device to obtain reference signals from a radio unit (RU) through the transceiver, obtain a transform covariance matrix for noise and interference of the reference signals through random embedding for dimensionality reduction, obtain an extraction matrix through subspace decomposition of the transform covariance matrix, and obtain transmission signals by performing equalization using the extraction matrix to uplink signals from the RU. The random embedding may be used to transform a first dimension having the number of receiving layers of the RU into a second dimension with a number less than the number of the receiving layers.

In embodiments, a device of a radio unit (RU) is provided. The device may comprise a radio frequency (RF) transceiver, a fronthaul transceiver, memory storing instructions, and a processor. The instructions may cause, when executed by the processor, the device to obtain a covariance matrix for noise and interference through reference signals that are received through the RF transceiver, obtain a noise vector matrix by performing eigen decomposition of the covariance matrix, obtain a filter matrix using the noise vector matrix and a channel matrix for the reference signals, obtain transform signals by applying the filter matrix to uplink signals obtained through the RF transceiver, and transmit, through the fronthaul transceiver to a digital unit (DU), data of the transform signals. The number of columns of the noise vector matrix may be smaller than the number of receiving layers of the RU.

According to an embodiment, the instructions may cause, when executed by the processor, the device to obtain an eigen vector matrix and eigen values by performing the eigen decomposition of the covariance matrix, and obtain the noise vector matrix through extracted column vectors corresponding to a specified number among column vectors of the eigen vector matrix and eigen values corresponding to the extracted column vectors.

According to an embodiment, the noise vector matrix may be determined based on the following equation. ${Z}^{˜} ≅ {V}_{1 : K} \sqrt{{Λ}_{1 : K}}$

***Ẑ*** denotes the noise vector matrix, ***V*_{1:*K*}** denotes a matrix configured with extracted column vectors corresponding to the specified number K, and **Λ_{1:K}** denotes a diagonal matrix including eigen values corresponding to the extracted column vectors according to the specified number K.

According to an embodiment, the number of rows of the filter matrix may correspond to the number of receiving layers of the RU. The number of columns of the filter matrix may correspond to a sum of the number of transmission layers and the number of columns of the noise vector matrix.

According to an embodiment, the reference signals may include uplink demodulation reference signals (DMRSs). The uplink signals may include physical uplink shared channel (PUSCH) signals.

In embodiments, a device of a radio unit (RU) may comprise a radio frequency (RF) transceiver, a fronthaul transceiver, memory storing instructions, and a processor. The instructions may cause, when executed by the processor, the device to obtain reference signals through the RF transceiver, obtain a transform covariance matrix for noise and interference through the reference signals, obtain an extraction matrix having column vectors corresponding to a specified number, by performing QR decomposition of the covariance matrix, among column vectors of an orthogonal matrix of the QR decomposition, obtain a filter matrix using a projection matrix obtained from the extraction matrix and a channel matrix for the reference signals, obtain transform signals by applying the filter matrix to uplink signals obtained through the RF transceiver, and transmit, through the fronthaul transceiver to a digital unit (DU), data of the transform signals.

According to an embodiment, the projection matrix may be determined based on the following equation. ${P}_{{R}_{nn}^{⊥}} ≅ I - {Q}_{1 : K} {{Q}_{1 : K}}^{H}$${P}_{{R}_{nn}^{⊥}}$ denotes the projection matrix, **I** denotes an identity matrix, and **Q_{1:*K*}** denotes the extraction vector.

According to an embodiment, the filter matrix may be determined based on the following equation. $A ′ = {P}_{{R}_{nn}^{⊥}} H$

**A'** denotes the filter matrix, ${P}_{{R}_{nn}^{⊥}}$denotes the projection matrix, and denotes the channel matrix.

According to an embodiment, the number of rows of the filter matrix may correspond to the number of receiving layers of the RU. The number of columns of the filter matrix may correspond to the number of transmission layers.

According to an embodiment, the reference signals may include uplink demodulation reference signals (DMRSs). The uplink signals may include physical uplink shared channel (PUSCH) signals.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A device of a radio unit (RU), comprising:
a radio frequency (RF) transceiver;
a fronthaul transceiver;
memory storing instructions; and
a processor,
wherein the instructions cause, when executed by the processor, the device to:
obtain reference signals through the RF transceiver;
obtain a transform covariance matrix for noise and interference of the reference signals through random embedding for dimensionality reduction;
obtain an extraction matrix through subspace decomposition of the transformation covariance matrix;
perform pre-combining using the extraction matrix to uplink signals obtained through the RF transceiver; and
transmit, through the fronthaul transceiver to a digital unit (DU), data of the uplink signals on which the pre-combining is performed,
wherein the random embedding is used to transform a first dimension with the number of receiving layers of the RU into a second dimension with a number less than the number of receiving layers.

2. The device of claim 1, wherein the instructions cause, when executed by the processor, the device to:
obtain a noise and interference covariance matrix for a channel of the reference signals, and
obtain the transform covariance matrix by multiplying a random embedding matrix for the random embedding to the noise and interference covariance matrix, and
wherein each column vector of the random embedding matrix is linearly independent.

3. The device of claim 1, wherein the instructions cause, when executed by the processor to obtain the transform covariance matrix, the device to:
obtain a channel matrix for the reference signals;
obtain a random-embedded channel matrix by multiplying a random embedding matrix for the random embedding to the channel matrix;
obtain a noise and interference covariance matrix for the random-embedded channel matrix, as the transform covariance matrix, and
wherein each column vector of the random embedding matrix is linearly independent.

4. The device of claim 1, wherein the instructions cause, when executed by the processor to obtain the extraction matrix, the device to:
perform QR decomposition for the transform covariance matrix, and
extract at least one column vector as much as a specified number K among column vectors of an orthogonal matrix according to the QR decomposition, and
wherein the extraction matrix corresponds to the extracted at least one column vector.

5. The device of claim 1, wherein the instructions cause, when executed by the processor to obtain the extraction matrix, the device to:
perform eigen decomposition for the transform covariance matrix, and
extract at least one column vector as much as a specified number K among column vectors of eigen vector matrices according to the eigen decomposition, and
wherein the extraction matrix corresponds to the extracted at least one column vector.

6. The device of claim 1,
wherein the random embedding includes a multiplication of a random embedding matrix, and
wherein the random embedding matrix is an independent and isotropic distributed (i.i.d) gaussian random matrix, an isotropic random matrix, or a tensor matrix.

7. The device of claim 1, wherein the uplink signals include at least one of physical uplink shared channel (PUSCH) signals, sounding reference signals (SRSs) or uplink demodulation reference signals (DMRSs).

8. The device of claim 1, wherein the instructions cause, when executed by the processor, the device to:
determine a precoding matrix for a downlink signal based on the extraction matrix,
generate a transmission signal by applying the precoding matrix to the downlink signal, and
transmit the transmission signal through the RF transceiver.

9. The device of claim 1, wherein the instructions cause, when executed by the processor, the device to:
obtain a projection matrix for a null-space, based on the extraction matrix,
obtain a filter matrix by applying the projection matrix to a channel matrix for the reference signals, and
perform the pre-combining by multiplying the filter matrix to the uplink signals.

10. A device of a radio unit (RU), comprising:
a radio frequency (RF) transceiver;
a fronthaul transceiver;
memory storing instructions; and
a processor,
wherein the instructions cause, when executed by the processor, the device to:
obtain a covariance matrix for noise and interference through reference signals that are received through the RF transceiver;
obtain a noise vector matrix by performing eigen decomposition of the covariance matrix;
obtain a filter matrix using the noise vector matrix and a channel matrix for the reference signals;
obtain transform signals by applying the filter matrix to uplink signals obtained through the RF transceiver; and
transmit, through the fronthaul transceiver to a digital unit (DU), data of the transform signals,
wherein the number of columns of the noise vector matrix is smaller than the number of receiving layers of the RU.

11. The device of claim 10, wherein the instructions cause, when executed by the processor, the device to:
obtain an eigen vector matrix and eigen values by performing the eigen decomposition of the covariance matrix;
obtain the noise vector matrix through:
extracted column vectors corresponding to a specified number among column vectors of the eigen vector matrix, and
eigen values corresponding to the extracted column vectors.

12. The device of claim 10,
wherein the number of rows of the filter matrix corresponds to the number of receiving layers of the RU,
wherein the number of columns of the filter matrix corresponds to a sum of the number of transmission layers and the number of columns of the noise vector matrix,
wherein the reference signals include uplink demodulation reference signals (DMRSs), and
wherein the uplink signals include physical uplink shared channel (PUSCH) signals.

13. A device of a radio unit (RU), comprising:
a radio frequency (RF) transceiver;
a fronthaul transceiver;
memory storing instructions; and
a processor,
wherein the instructions cause, when executed by the processor, the device to:
obtain reference signals through the RF transceiver;
obtain a transform covariance matrix for noise and interference through the reference signals;
obtain an extraction matrix having column vectors corresponding to a specified number, by performing QR decomposition of the covariance matrix, among column vectors of an orthogonal matrix of the QR decomposition;
obtain a filter matrix using a projection matrix obtained from the extraction matrix and a channel matrix for the reference signals;
obtain transform signals by applying the filter matrix to uplink signals obtained through the RF transceiver; and
transmit, through the fronthaul transceiver to a digital unit (DU), data of the transform signals.

14. The device of claim 13, wherein the projection matrix is determined based on a following equation: ${P}_{{R}_{nn}^{⊥}} ≅ I - {Q}_{1 : K} {{Q}_{1 : K}}^{H}$
${P}_{{R}_{nn}^{⊥}}$ denotes the projection matrix, I denotes an identity matrix, and denotes the extraction matrix, and
wherein the filter matrix is determined based on a following equation: $A ′ = {P}_{{R}_{nn}^{⊥}} H$
**A'** denotes the filter matrix, ${P}_{{R}_{nn}^{⊥}}$ denotes the projection matrix, and H denotes the channel matrix.

15. The device of claim 13,
wherein the number of rows of the filter matrix corresponds to the number of receiving layers of the RU,
wherein the number of columns of the filter matrix corresponds to the number of transmission layers,
wherein the reference signals include uplink demodulation reference signals (DMRSs), and
wherein the uplink signals include physical uplink shared channel (PUSCH) signals.
